(19) Europäisches Patentamt

European Patent Office

Office européen des brevets

(11) **EP 0 493 748 B1**

(12) **EUROPÄISCHE PATENTSCHRIFT**

(45) Veröffentlichungstag und Bekanntmachung des Hinweises auf die Patenterteilung:
**13.03.1996 Patentblatt 1996/11**

(51) Int Cl.6: **H04L 27/38**, H04L 27/34, H04L 27/06

(21) Anmeldenummer: **91121748.7**

(22) Anmeldetag: **19.12.1991**

(54) **Verfahren und Schaltungsanordnung zum Ermitteln einer Regelinformation für die Quadraturphase in einem QAM-Empfänger**

Method and circuit arrangement for determination of a control information for the quadrature phase in a QAM receiver

Procédé et dispositif pour la détermination d'une information de réglage pour la phase quadrature dans un récepteur QAM

(84) Benannte Vertragsstaaten:
**AT CH DE FR LI**

(72) Erfinder: **Ottka, Manfred, Dipl.-Ing.
W-7158 Sulzbach/Murr (DE)**

(30) Priorität: **24.12.1990 DE 4041701**

(43) Veröffentlichungstag der Anmeldung:
**08.07.1992 Patentblatt 1992/28**

(73) Patentinhaber: **ANT Nachrichtentechnik GmbH
D-71522 Backnang (DE)**

(56) Entgegenhaltungen:
EP-A- 0 143 469         EP-A- 0 184 805
EP-A- 0 257 625         EP-A- 0 325 661

- **2nd European Conference on Radio Relay Systems, 17-22 April 1989, Abano, Terme-Padua, Italien, Seiten 267-274, A.Lygre et al.: "An all-digital implementation of an adaptive baseband receiver for 64 QAM"**

EP 0 493 748 B1

**Beschreibung**

Die vorliegende Erfindung betrifft ein Verfahren und Schaltungsanordnungen zum Ermitteln einer Regelinformation für die Quadraturphase in einem Empfänger für quadraturamplitudenmodulierte (QAM) Signale mit Hilfe eines Diskriminators, von dem aus den Signalkomponenten des QAM-Empfangssignals eine Regelinformation für die Quadraturphase der für die Demodulation des QAM-Empfangssignals im Empfänger zuständigen Trägersignale abgeleitet wird.

Ein derartiges Verfahren ist aus dem Tagungsband der "2nd European Conference on Radio Relay Systems", 17. - 22. April 1989, Abano Terme-Padua, Italien Seite 267 - 274 bekannt. Insbesondere die auf der Seite 269 dieser Veröffentlichung angegebene Gleichung (4) macht deutlich, daß hier in einfacher Weise das Vorzeichen des Quadraturphasenfehlers des QAM-Empfangssignals geschätzt wird, um die Quadraturphase im QAM-Empfänger um einen kleinen Korrekturwert verstellen zu können. Der Diskriminator dieses bekannten QAM-Empfängers multipliziert dazu das Vorzeichen des QAM-Quadratur-Empfangssignals - das Empfangssignal besteht bekanntlich aus einer sogenannten In-Phase und einer Quadratur-Signalkomponente - mit dem Vorzeichen des In-Phase-Entscheiderfehlers. Der Entscheider ordnet hierbei jedem QAM-Empfangssignalwert den jeweils am wahrscheinlichsten gesendeten QAM-Signalwert zu. Der Entscheiderfehler ist dann die Differenz aus dem empfangenen Signal und dem ihm zugeordneten QAM-Signalwert. Für den in der zitierten Literaturstelle angegebenen Diskriminator ergeben sich Diskriminatorkennlinien, welche zu beiden Seiten des Arbeitspunktes bereits nach einem relativ kleinen Quadraturphasenfehler wieder auf die Höhe des Arbeitspunktes abfallen. Dies hat zur Folge, daß bereits bei relativ kleinen Quadraturphasenfehlern im Empfänger keine eindeutige Regel information mehr durch den Diskriminator geliefert werden kann.

Der Erfindung liegt nun die Aufgabe zugrunde, ein Verfahren und Schaltungsanordnungen der eingangs genannten Art anzugeben, die eine Regelinformation erzeugen, mit der die Quadraturphase im Empfänger sehr rasch und mit möglichst geringer Abweichung auf die Quadraturphase des jeweiligen QAM-Empfangssignalwertes nachgeregelt werden kann.

Erfindungsgemäß wird diese Aufgabe durch die Merkmale der Ansprüche 1, 5 und 10 gelöst. Vorteilhafte Weiterbildungen der Erfindung gehen aus den Unteransprüchen hervor.

Nach dem erfundenen Verfahren wird ein Schätzwert für den Quadraturphasenfehler - einschließlich seines Betrages und seines Vorzeichens - des jeweiligen QAM-Empfangssignalwertes gebildet. Da der Schätzwert unter anderem aus deh Auftrittshäufigkeiten einer Reihe von möglichen Quadraturphasenfehlereinstellungen abgeleitet wird, ergibt sich hieraus eine qualitativ bessere Regel information als aus dem Schätzwert für den Quadraturphasenfehler gemäß der eingangs zitierten Literaturstelle.

Anhand eines in der Zeichnung dargestellten Ausführungsbeispiels wird nachfolgend die Erfindung näher erläutert. Es zeigen:

Figur 1      einen QAM-Empfänger,

Figur 2      einen Diskriminator aus dem QAM-Empfänger,

Figur 3      einen zum Diskriminator gehörenden Speicher,

Figur 4      einen zum Diskriminator gehörenden Schwellwertentscheider und

Figur 5      Diskriminatorkennlinien.

Bekanntlich wird ein QAM-Signal aus zwei orthogonalen Trägersignalen $\cos(\omega_o t)$ und $\sin(\omega_o t)$ gebildet, die mit unabhängigen Nachrichtensignalen a und b moduliert sind. Das QAM-Signal z hat dann die Form:

$$z = a \cdot \cos(\omega_o t + \delta) + b \cdot \sin(\omega_o t - \delta) \qquad (1)$$

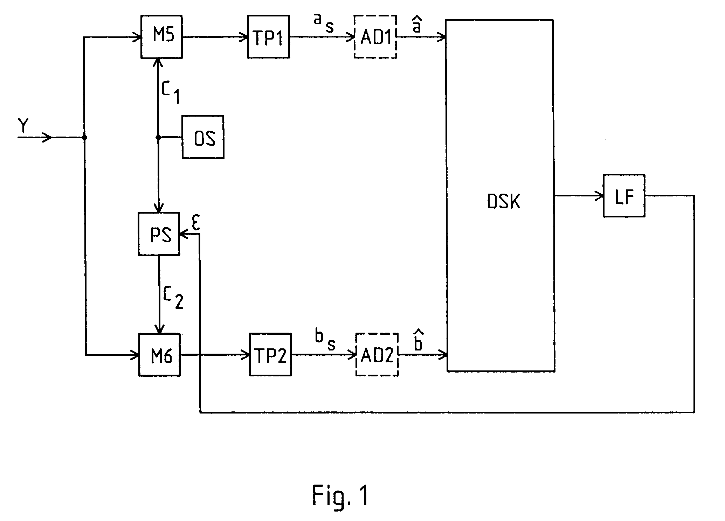

wobei $\omega_o$ die Kreisfrequenz der im Sender erzeugten Träger, t die Zeitvariable und $\delta$ der Quadaraturphasenfehler der Trägersignale bedeuten. In dem in Figur 1 dargestellten Empfänger wird das QAM-Empfangssignal z demoduliert, das heißt in das sogenannte Basisband umgesetzt. Dazu besitzt der Empfänger zwei Multiplizierer M5 und M6, von denen der eine Multiplizierer M5 das QAM-Empfangssignal mit dem Trägersignal

$$c_1 = 2 \cdot \cos(\omega_1 t - \varepsilon) \qquad (2)$$

und der andere Multiplizierer M6 das QAM-Empfangssignal z mit

$$c_2 = 2 \cdot \sin(\omega_1 t + \varepsilon) \qquad (3)$$

multipliziert. Nach anschließender Filterung durch Tiefpässe TP1 und TP2 entstehen hierdurch die Signale

$$a_S = a \cdot \cos(\Delta\omega t + \delta + \varepsilon) + b \cdot \sin(\Delta\omega t - \delta + \varepsilon)$$

$$(4)$$

$$b_S = -a \cdot \sin(\Delta\omega t + \delta - \varepsilon) + b \cdot \cos(\Delta\omega t - \delta - \varepsilon)$$

$$(5)$$

Mit $\Delta\omega = \omega_o - \omega_1$ ist die Differenzfrequenz zwischen der Trägerfrequnz $\omega_o$ des QAM-Empfangssignals und der von einem lokalen Oszillator OS im Empfänger erzeugten Trägerfrequenz $\omega_1$ bezeichnet, und $\varepsilon$ gibt den Quadraturphasenfehler zwischen den beiden Trägersignalen c1 und c2 im Empfänger wieder. Das Signal $a_S$ wird als "In-Phase"-Signalkomponente und $b_S$ als "Quadratur"-Signalkomponente bezeichnet. Üblicherweise werden nun im Empfänger die beiden Trägersignale c1 und c2 derart geregelt, daß $\omega_1=\omega_o$ und $\varepsilon = \delta$ gilt. Die erste Bedingung $\omega_1=\omega_o$ wird durch eine auf den Lokaloszillator OS einwirkende Trägerfrequenz- und Phasenregelung erfüllt. Die zweite Bedingung $\varepsilon=\delta$ erreicht man durch Regelung eines im Empfänger angeordneten Phasenschiebers PS. Sind beide Bedingungen exakt erfüllt, so gilt für die beiden demodulierten analogen Signalkomponenten

$$a_S=a\cdot\cos(2\delta) \qquad (6)$$

$$b_S=b\cdot\cos(2\delta) \qquad (7)$$

Eine korrekt geregelte Demodulation löscht also die beiden "Übersprechterme" zwischen der In-Phase- und der Quadratursignalkomponente aus, und es verbleibt lediglich eine vom Quadraturphasenfehler $\delta$ abhängige Amplitudenverzerrung, die jedoch durch eine entsprechende Amplitudenregelung vollständig beseitigt werden kann. Auf Maßnahmen zur Erfüllung der ersten Bedingung $\omega_1 =\omega_o$ wird hier nicht näher eingegangen. Dazu wird auf bereits bekannte Trägerfrequenz- und Phasenregelungsverfahren hingewiesen.

Gegenstand der vorliegenden Erfindung ist die Regelung der Quadraturphase im Empfänger auf einen Wert, der dem des Quadraturphasenfehlers 6 der dem Empfänger zugehenden QAM-Empfangssignalwerte entspricht. Ein zum Empfänger gehörender Diskriminator DSK, der aus den beiden demodulierten Signalkomponenten $a_S$ und $b_S$ die Ablage der Quadraturphasenfehler $\delta$-$\varepsilon$ ermittelt, und ein dem Diskriminator DSK nachgeschaltetes Regelfilter LF gewinnen aus dem QAM-Empfangssignal die Regelinformation $\varepsilon$ für den Phasenschieber PS, Da der Diskriminator DSK zweckmäßigerweise digitale Signale verarbeitet, werden die von den Tiefpaßfiltern TP1 und TP2 abgegebenen analogen Signalkomponenten $a_S$ und $b_S$ durch eine Quantisierungskennlinie im Analog/Digital-Wandlern AD1 und AD2 in digitale Signalkomponenten a und b umgesetzt.

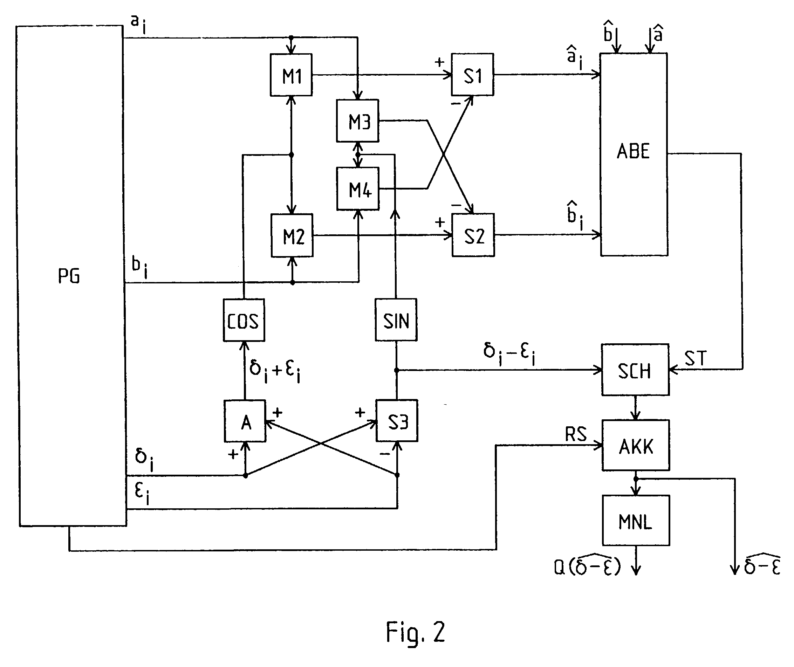

Ein Ausführungsbeispiel eines Diskriminators DSK zeigt die Figur 2. In einem QAM-System steht für die Nachrichtenübertragung eine begrenzte Zahl von QAM-Signalwerten zur Verfügung. Die Zahl hängt von der Anzahl der Signalzustände (4,16,64,256..) der Quadraturamplitudenmodulation ab.

Empfängt man ein bestimmtes festes quantisiertes Signalkomponentenpaar (a,b), so kann man prinzipiell mit Hilfe eines Übertragungsmodells, dem die Diskriminatorrealisierung nach Figur 2 zugrundeliegt, Parametertupel L=(a,b,$\delta$,$\varepsilon$) schätzen, die im realen QAM-System mit hoher Wahrscheinlichkeit vorlagen. Im allgemeinen können vom realen QAM-System mehrere verschiedene Tupel auf das gleiche Signalkomponentenpaar (a,b) abgebildet werden. Diskretisiert man jedoch die Quadraturphasenfehlerverteilungen für $\delta$ und $\varepsilon$, so existiert insgesamt jedoch eine endliche Anzahl von überhaupt möglichen Tupeln $L_i=(a_i,b_i,\delta_i,\varepsilon_i)$, i=1,2,...

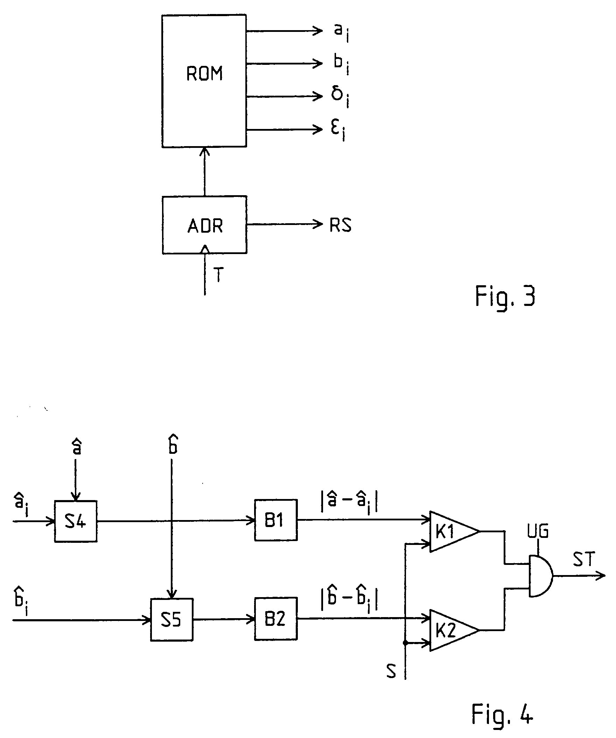

In einem zum Diskriminator gehörenden Parametergenerator PG sind nun alle möglichen Parametertupel $L_i$ abgelegt und können dort zyklisch beginnend mit dem Index i=1 ausgelesen werden. Wie der Figur 3 zu entnehmen ist, kann dieser Parametergenerator PG aus einem Speicher ROM und einem Adresszähler ADR bestehen. Der Adresszähler ADR bewirkt, daß alle Parametertupel aus dem Speicher ROM der Reihe nach ausgelesen werden, und zwar ist der Adresszähler ADR durch ein Taktsignal T so getaktet, daß während der Zeit, in der jeweils ein übertragener QAM-Empfangssignalwert am Diskriminatoreingang anliegt, alle Parametertupel $L_i=(a_i,b_i,\delta_i,\varepsilon_i)$ der Reihe nach ausgelesen werden. Jedesmal, bevor der Adresszähler ADR von neuem anfängt zu zählen, gibt er ein Rücksetzsignal RS ab, dessen Bedeutung weiter unten noch erläutert wird. Aus den mit jedem Zähltakt des Adresszählers ADR ausgegebenen Parametertupeln wird gemäß der folgenden Gleichungen

$$\hat{a}_i=a_i\cos(\delta_i+\varepsilon_i)-b_i\sin(\delta_i-\varepsilon_i) \qquad (8)$$

$$\hat{b}_i=-a_i\sin(\delta_i-\varepsilon_i)+b_i\cos(\delta_i+\varepsilon_i) \qquad (9)$$

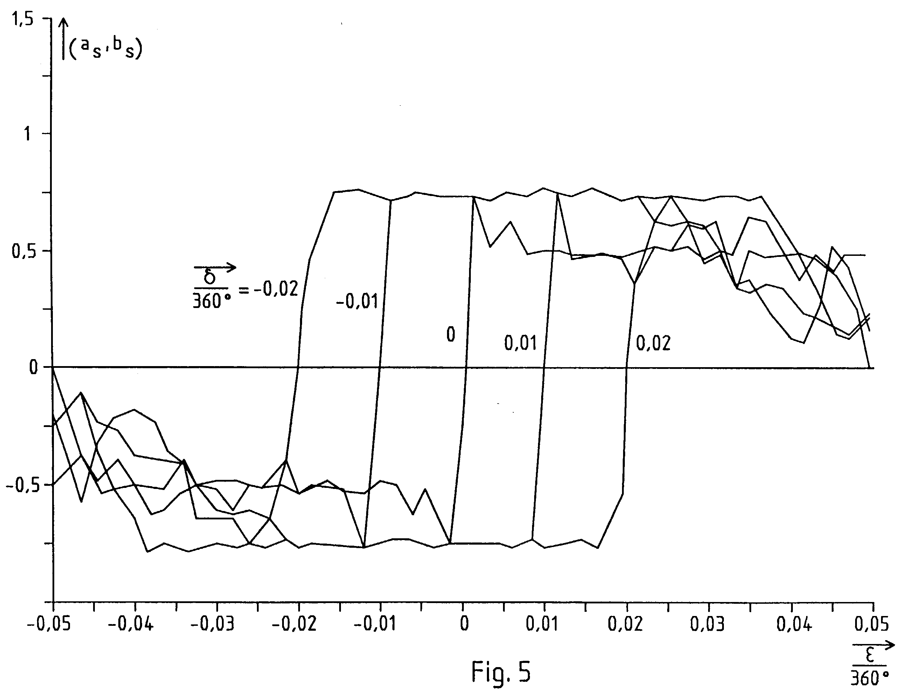

die Signalkomponente $\hat{a}_i$ mit Hilfe eines Addierers A, eines Subtrahierers S3, von vier Multiplizierern M1 bis M4, eines Cosinusgenerators COS, eines Sinusgenerators SIN und eines Subtrahierers S1 gebildet, und die andere Signalkomponente $\hat{b}_i$ wird vom Addierer A, von dem Subtrahierer S3, von vier Multiplizierern Ml bis M4, dem Cosinusgenerator COS, dem Sinusgenerator SIN und dem Subtrahierer S2 erzeugt. Außerdem bildet der Subtrahierer S3 zu jedem Parametertupel die Differenz $\delta_i$-$\varepsilon_i$ der zugehörigen Quadraturphasenfehler $\delta_i$ und $\varepsilon_i$. Ein Schwellwertentscheider ABE bestimmt die Ablage jedes aus dem zugehörigen Parametertupel $L_i$ berechneten Signalkomponentenpaares $\hat{a}_i$ und $\hat{b}_i$ von dem jeweils am Diskriminator anliegenden Empfangssignalkomponentenpaar $\hat{a}$ und $\hat{b}$. Liegt diese Ablage unterhalb einer vorgegebenen Schwelle, so gibt der Schwellwertentscheider ABE ein Steuersignal ST ab. Eine mögliche Ausführung eines Schwellwertentscheiders ABE zeigt die Figur 4. Dort wird von zwei Subtrahierern S4 und S5 die Differenz $\hat{a}$-$\hat{a}_i$ und die Differenz $\hat{b}$-$\hat{b}_i$ gebildet. Betragsbildner B1 und B2 erzeugen die Beträge der beiden Differenzen, von denen jede einem Komparator K1, K2 zugeführt wird. In diesen Komparatoren K1 und K2 werden die Differenzen $|\hat{a}$-$\hat{a}_i|$ und $|b$-$b_i|$ mit einer Schwelle S verglichen. Ein Und-Gatter UG, dem die Ausgangssignale der beiden Komparatoren K1, K2 zugeführt sind, gibt ein Steuersignal ST ab, wenn beide Komparatoren K1 und K2 ein Ausgangssignal bereitstellen; das ist dann der Fall, wenn beide Differenzen $|\hat{a}$-$\hat{a}_i|$ und $|b$-$b_i|$ unterhalb der Schwelle S liegen.

Das Steuersignal ST veranlaßt einen Schalter SCH dazu, die zu dem die niedrige Ablage verursachenden Parametertupel $L_i=(a_i, b_i, \delta_i, \varepsilon_i)$ gehörende Quadraturfehlerdifferenz $\delta_i$-$\varepsilon_i$ auf einen Akkumulator AKK durchzuschalten. Der Akkumulator AKK addiert alle diejenigen Quadraturfehlerdifferenzen $\delta_i$-$\varepsilon_i$ auf, welche während der Zeit, in der ein QAM-Empfangssignalwert $\hat{a},\hat{b}$ am Diskriminiatorausgang anliegt, vom Steuersignal ST auf den Akkumulator AKK durchgeschaltet werden. Nachdem alle Parametertupel aus dem Parametergenerator PG ausgelesen worden sind, gibt der Inhalt des Akkumulators AKK ein optimiertes Schätzmaß für die tatsächlich vorhandene Quadraturphasenfehlerdifferenz $\widehat{\delta-\epsilon}$ an. Dieses Schätzmaß $\widehat{\delta-\epsilon}$ ist eine geeignete Regelinformation, aus der das Regelfilter LF (siehe Figur 1) das Regelsignal $\varepsilon$ für den Phasenschieber PS ableitet.

Erfüllt dieses Schätzmaß $\widehat{\delta-\epsilon}$ nicht den gewünschten Verlauf der Diskriminatorkennlinie, so kann eine Verbesserung durch einen dem Akkumulator AK nachgeschalteten Schaltungsbaustein MNL mit einer entsprechenden Übertragungskennlinie erreicht werden. Die Übertragungskennlinie dieses Schaltungsbausteins MNL muß einen monotonen Verlauf haben. Geeignete Schaltungsbausteine MNL, die diese Bedingung erfüllen, sind zum Beispiel Quantisierer, mit denen man im Fall einer digitalen Realisierung der Anordnung die Anzahl der Bits bei der Darstellung des Schätzmaßes $Q(\widehat{\delta-\epsilon})$ auf eine geringere Anzahl reduzieren kann.

Die Figur 5 zeigt solche Diskriminatorkennlinien, die mit dem vorangehend beschriebenen Verfahren, welches die in Figur 2 dargestellte Schaltungsanordnung durchführt, realisiert werden können. Die Diskriminatorkennlinien zeigen die Abhängigkeit des für die Steuerung des Phasenschiebers PS vorgesehenen Quadraturphasenfehlers $\varepsilon$ in Abhängigkeit der QAM-Empfangssignale $\hat{a}_s$, $\hat{b}_s$ bei verschiedenen Quadraturphasenfehlern 6 des jeweiligen QAM-Empfangssignals. Wie den Diskriminatorkennlinien in Figur 5 zu entnehmen ist, fallen diese zu beiden Seiten des Arbeitspunktes nur sehr allmählich ab.

Der Diskriminator DSK kann anstelle der in Figur 2 dargestellten Schaltung auch durch einen Speicher realisiert werden, in dem zu jedem möglichen QAM-Empfangssignalwert die nach dem zuvor beschriebenen Verfahren ermittelte Regelinformation abgespeichert ist. Der jeweils am Eingang des Diskriminators DSK anliegende QAM-Empfangssignalwert dient dann als Adresse für denjenigen Speicherplatz, in dem die diesem QAM-Empfangssignalwert zugeordnete Regelinformation abgespeichert ist.

**Patentansprüche**

1. Verfahren zum Ermitteln einer Regelinformation für die Quadraturphase in einem Empfänger für quadraturamplitudenmodulierte (QAM) Signale mit Hilfe eines Diskriminators, von dem aus den Signalkomponenten des QAM-Empfangssignals eine Regelinformation für die Quadraturphase der für die Demodulation des QAM-Empfangssignals im Empfänger zuständigen Trägersignale abgeleitet wird, dadurch gekennzeichnet,

daß zu jedem QAM-Empfangssignalkomponentenpaar

$$y=(a_s, b_s)$$

mit den Signalkomponenten

$$a_s = a \cos(\delta+\varepsilon) - b \sin(\delta-\varepsilon)$$

und

$$b_s = -a \sin(\delta-\varepsilon) + b \cos(\delta+\varepsilon),$$

wobei a und b die Amplituden der in Quadratur zueinander stehenden Signalkomponenten sind, $\delta$ der Quadraturphasenfehler der Sendesignalträger und $\varepsilon$ der Quadraturphasenfehler der das QAM-Signal ins Basisband umsetzenden Trägersignale ist, durch Quantisierung seiner beiden Komponenten $a_s$ und $b_s$ ein Wertepaar

$$\hat{y}=(\hat{a}, \hat{b})$$

gebildet wird,

daß für jedes Empfangssignalkomponentenpaar $\hat{y}=(\hat{a}, \hat{b})$ eine endliche Anzahl von im QAM-Übertragungssystem möglichen Parametertupeln $L_i=(a_i,b_i,\delta_i,\varepsilon_i)$, i=0,1,2, ... erzeugt wird, daß aus jedem Parametertupel ein Wertepaar

$$\hat{y}_i=(\hat{a}_i, \hat{b}_i)$$

mit den Komponenten

$$\hat{a}_i = a_i \cos(\delta_i,+\varepsilon_i) - b_i \sin(\delta_i-\varepsilon_i)$$

und

$$\hat{b}_i = -a_i \sin(\delta_i-\varepsilon_i) + b_i \cos(\delta_i+\varepsilon_i)$$

gebildet wird,

daß für dieses Wertepaar $\hat{y}_i$ ein Abstandswert vom Wertepaar $\hat{y}$ bestimmt wird, indem die Differenzen $\hat{a}-\hat{a}_i$ und $\hat{b}-\hat{b}_i$ gebildet werden,

daß durch einen Schwellwertvergleich entschieden wird, ob dieser Abstand kleiner als ein vorgegebener Schwellwert (S) ist, und daß die Zusammenfassung aller jener Unterschiede zwischen dem Quadraturphasenfehler $\delta_i$ und dem Quadraturphasenfehler $\varepsilon_i$, die vorliegen, wenn der zugehörige Wertepaarabstand kleiner als der Schwellwert (S) ist, als Regelinformation für die Regelung des empfangsseitigen Quadraturphasenfehlers $\varepsilon$ benutzt wird.

2. Verfahren nach Anspruch 1, dadurch gekennzeichnet, daß die Differenz der zu jedem Parametertupel $L_i=(a_i, b_i, \delta_i, \varepsilon_i)$ gehörenden Quadraturphasenfehler $\delta_i$ und $\varepsilon_i$ gebildet wird und daß die Quadraturphasenfehlerdifferenz $\delta_i - \varepsilon_i$, welche zu dem Parametertupel $L_i$ gehört, das eine unterhalb der Vorgegebenen Schwelle (S) liegende Ablage zwischen dem aus dem Parametertupel hervorgehenden Signalkomponentenpaar $a_i$, $b_i$ und dem jeweils anliegenden Empfangssignalkomponentenpaar a,b hervorruft, zur Erzeugung der Regelinformation verwendet wird.

3. Verfahren nach Anspruch 2, dadurch gekennzeichnet, daß die Regelinformation aus der Summe aller derjenigen Quadraturphasenfehlerdifferenzen $\delta_i - \varepsilon_i$ gebildet wird, welche zu denjenigen Parametertupeln $L_i=(a_i, b_i, \delta_i, \varepsilon_i)$ gehören, die eine unterhalb der vorgegebenen Schwelle (S) liegende Ablage hervorrufen.

4. Verfahren nach Anspruch 3, dadurch gekennzeichnet, daß das Summensignal aus den Quadraturfehlerdifferenzen $\delta_i-\varepsilon_i$ einem Schaltungsbaustein(MNL) zugeführt wird, dessen Übertragungskennlinie einen solchen Funktionsverlauf verliehen wird, daß damit eine gewünschte Diskriminatorkennlinie realisiert wird.

5. Schaltungsanordnung zum Ermitteln einer Regelinformation für die Quadraturphase in einem Empfänger für quadraturamplitudenmodulierte (QAM) Signale mit Hilfe eines Diskriminators, der aus den Signalkomponenten des QAM-Empfangssignals eine Regelinformation für die Quadraturphase der für die Demodulation des QAM-Empfangssignals im Empfänger zuständigen Trägersignale ableitet, dadurch gekennzeichnet, daß Quantisierer (AD1, AD2) vorhanden sind, die zu jedem im QAM-Empfänger entstehenden QAM-Empfangssignalkomponentenpaar

$$y=(a_s, b_s)$$

mit den Signalkomponenten

$$a_s=a\cdot\cos(\delta+\varepsilon)-b\cdot\sin(\delta-\varepsilon)$$

und

$$b_s=-a\cdot\sin(\delta-\varepsilon)+b\cdot\cos(\delta+\varepsilon),$$

wobei a und b die Amplituden der in Quadratur zueinander stehenden Signalkomponenten sind, $\delta$ der Quadraturphasenfehler der Sendesignalträger und $\varepsilon$ der Quadraturphasenfehler der das QAM-Signal ins Basisband umsetzenden Trägersignale ist, ein Wertepaar

$$\hat{y}=(\hat{a}, \hat{b})$$

bilden,

daß ein Parametergenerator (PG) vorhanden ist, der für jedes Empfangssignalkomponentenpaar $\hat{y}=(\hat{a}, \hat{b})$ der Reihe nach eine endliche Anzahl von im QAM-Übertragungssystem möglichen Parametertupel $L_i=(a_i, b_i, \delta_i, \varepsilon_i)$, i=1,2,3, ... erzeugt,

daß Mittel (A, S1, S2, S3, M1, M2, M3, M4, COS, SIN) vorhanden sind, die zu jedem dieser Parametertupel Li ein Wertepaar

$$\hat{y}_i=(\hat{a}_i, \hat{b}_i)$$

mit den Komponenten

$$\hat{a}_i=a_i\cos(\delta_i+\varepsilon_i)-b_i\sin(\delta_i-\varepsilon_i)$$

und

$$\hat{b}_i=-a_i\sin(\delta_i-\varepsilon_i)+b_i\cos(\delta_i+\varepsilon_i)$$

bilden,

daß ein Schwellwertentscheider (ABE) vorhanden ist, der die Ablage jedes Wertepaares $\hat{y}_i$ von dem jeweils am Diskriminator anliegenden quantisierten Wertepaar $\hat{y}$ bestimmt und bei einer unterhalb einer vorgegebenen Schwelle (S) liegenden Ablage ein Steuersignal (ST) abgibt,

und daß das Steuersignal (ST) die Durchschaltung einer für die Quadraturregelung geeigneten Regelinformation ($\widehat{\delta-\varepsilon}$, Q ($\widehat{\delta-\varepsilon}$)), in der Q ($\widehat{\delta-\varepsilon}$) ein Schätzmaß für die Quadraturphasenfehlerdifferenz $\widehat{\delta-\varepsilon}$ ist, an den Ausgang des Diskriminators veranlaßt, die aus den Quadraturphasenfehlern $\delta_i$ und $\varepsilon_i$ abgeleitet ist, welche zu dem das Steuersignal (ST) auslösenden Parametertupel $L_i=(a_i, b_i, \delta_i, \varepsilon_i)$ gehören.

6. Schaltungsanordnung nach Anspruch 5, dadurch gekennzeichnet, daß ein Subtrahierer (S3) vorhanden ist, der die Differenz der zu jedem vom Parametergenerator (PG) erzeugten Parametertupel $L_i=(a_i, b_i, \delta_i, \varepsilon_i)$ gehörenden Quadaturphasenfehler $\delta_i$ und $\varepsilon_i$ bildet und daß die Quadraturphasenfehlerdifferenz $\delta_i - \varepsilon_i$, welche zu dem das Steuersignal (ST) auslösenden Parametertupel $L_i$ gehört, als Regelinformation ($\widehat{\delta-\varepsilon}$) dient.

7. Schaltungsanordnung nach Anspruch 6, dadurch gekennzeichnet, daß ein Akkumulator (AKK) vorhanden ist, der alle diejenigen Quadraturphasenfehlerdifferenzen $\delta_i - \varepsilon_i$ aufaddiert, welche das Steuersignal (ST) von allen vom Parametergenerator (PG)

erzeugten Parametertupeln $L_i$ auf den Akkumulator (AKK) durchschaltet, und daß der Akkumulator (AKK) derart ausgestaltet ist, daß jeweils zu Beginn einer jeden Parametertupelfolge $L_i$ der Akkumulatorinhalt gelöscht wird.

8. Schaltungsanordnung nach Anspruch 7, dadurch gekennzeichnet, daß das Ausgangssignal des Akkumulators (AKK) einem Schaltungsbaustein (MNL) zugeführt ist, dessen Übertragungskennlinie so gewählt ist, daß sein Ausgangssignal eine gewünschte Diskriminatorkennlinie realisiert.

9. Schaltungsanordnung nach einem der Ansprüche 5 bis 8, dadurch gekennzeichnet, daß der Parametergenerator (PG) durch einen Festwertspeicher (ROM) und einen zyklisch ablaufenden Adreßzähler (ADR) realisiert ist, wobei die Werte der Parametertupel $L_i=(a_i, b_i, \delta_i, \varepsilon_i)$ im Speicher (ROM) unter den vom Adreßzähler (ADR) gelieferten Adressen abgespeichert sind.

**Claims**

1. Method for the determination of control information for the quadrature phase in a receiver for quadrature-amplitude-modulated (QAM) signals with the aid of a discriminator, by means of which discriminator control information for the quadrature phase for those carrier signals which are responsible for the demodulation of the QAM received signal in the receiver is derived from the signal components of the received QAM signal, characterized in that, for each received QAM signal component pair

$$y=(a_s, b_s)$$

having the signal components

$$a_s=a \cos(\delta+\varepsilon)-b \sin(\delta-\varepsilon)$$

and

$$b_s=-a \sin(\delta-\varepsilon)+b \cos(\delta+\varepsilon),$$

where a and b are the amplitudes of those signal components having a 90° phase shift between them, $\delta$ is the quadrature phase error of the transmitted signal carrier, and $\varepsilon$ is the quadrature phase error of the carrier signals which convert the QAM signal into baseband, a value pair

$$\hat{y}=(\hat{a},\hat{b})$$

is formed by quantization of its two components $a_s$ and $b_s$, in that a finite number of parameter-tuples $L_i=(a_i,b_i,\delta_i,\varepsilon_i)$, $i=0,1,2, ...$, which are possible in the QAM transmission system, are produced for each received signal component pair $\hat{y}=(\hat{a},\hat{b})$, in that a value pair

$$\hat{y}_i=(\hat{a}_i, \hat{b}_i)$$

having the components

$$\hat{a}_i=a_i\cos(\delta_i+\varepsilon_i)-b_i\sin(\delta_i-\varepsilon_i)$$

and

$$\hat{b}_i=-a_i\sin(\delta_i-\varepsilon_i)+b_i\cos(\delta_i+\varepsilon_i)$$

is formed from each parameter-tuple, in that a separation value from the value pair $\hat{y}$ is determined for this value pair $\hat{y}_i$ by forming the differences $\hat{a}-\hat{a}_i$ and $\hat{b}-\hat{b}_i$, in that a threshold value comparison is used to decide whether this separation is less than a predetermined threshold value (S), and in that the combination of all those differences between the quadrature phase error $\delta_i$ and the quadrature phase error $\varepsilon_i$ which are present when the associated value pair separation is less than the threshold value (S) is used as control information for controlling the quadrature phase error $\varepsilon$ at the reception end.

2. Method according to Claim 1, characterized in that the difference between the quadrature phase errors $\delta_i$ and $\varepsilon_i$ associated with each parameter-tuple $L_i=(a_i,b_i,\delta_i,\varepsilon_i)$ is formed, and in that the quadrature phase error difference $\delta_i - \varepsilon_i$ which is associated with the parameter-tuple $L_i$ which causes an offset of less than the predetermined threshold (S) between the signal component pair $a_i$, $b_i$ produced by the parameter-tuple and the respectively applied received signal component pair a,b is used to produce the control information.

3. Method according to Claim 2, characterized in that the control information is formed from the sum of all those quadrature phase error differences $\delta_i - \varepsilon_i$ which are associated with those parameter-tuples $L_i=(a_i,b_i,\delta_i,\varepsilon_i)$ which cause an offset of less than the predetermined threshold (S).

4. Method according to Claim 3, characterized in that the sum signal of the quadrature error differences $\delta_i-\varepsilon_i$ is fed to a circuit module (MNL) whose transfer function is provided with a functional profile such that a desired discriminator characteristic is implemented using it.

5. Circuit arrangement for the determination of control information for the quadrature phase in a receiver for quadrature-amplitude-modulated (QAM) signals with the aid of a discriminator, by means of which discriminator control information for the quadrature phase for those carrier signals which are responsible for the demodulation of the QAM received signal in the receiver is derived from the signal components of the received QAM signal, characterized in that quantizes (AD1, AD2) are provided which, for each QAM received signal component pair

$$y=(a_s, b_s)$$

occurring in the QAM receiver and having the signal components

$$a_s=a\cdot\cos(\delta+\varepsilon)-b\cdot\sin(\delta-\varepsilon)$$

and

$$b_s=-a.\sin(\delta-\varepsilon)+b.\cos(\delta+\varepsilon),$$

where a and b are the amplitudes of those signal components having a 90° phase shift between them, $\delta$ is the quadrature phase error of the transmitted signal carrier, and $\varepsilon$ is the quadrature phase error of the carrier signals which convert the QAM signal into baseband, form a value pair

$$\hat{y}=(\hat{a}, \hat{b})$$

in that a parameter generator (PG) is provided which produces a finite number of parameter-tuples $L_i=(a_i,b_i,\delta_i,\varepsilon_i)$, i=1,2,3, ..., which are possible in the QAM transmission system, in series for each received signal component pair $\hat{y}=(\hat{a}, \hat{b})$,
in that means (A, S1, S2, S3, M1, M2, M3, M4, COS, SIN) are provided which form a value pair

$$\hat{y}_i=(\hat{a}_i, \hat{b}_i)$$

for each of these parameter-tuples $L_i$, having the components

$$\hat{a}_i=a_i\cos(\delta_i+\varepsilon_i)-b_i\sin(\delta_i-\varepsilon_i)$$

and

$$\hat{b}_i=-a_i\sin(\delta_i-\varepsilon_i)+b_i\cos(\delta_i+\varepsilon_i)$$

in that a threshold value decision element (ABE) is provided which determines the offset of each value pair $\hat{y}_i$ from the quantized value pair $\hat{y}$ in each case present at the discriminator and emits a control signal (ST) in the event of an offset of less than a predetermined threshold (S),
and in that the control signal (ST) causes control information ($\hat{\delta\text{-}\varepsilon}$, Q ($\hat{\delta\text{-}\varepsilon}$)) which is suitable for quadrature control to be switched through, in which control information Q($\hat{\delta\text{-}\varepsilon}$) is an estimated measure of the quadrature phase error difference $\hat{\delta\text{-}\varepsilon}$, at the output of the discriminator, which information is derived from the quadrature phase errors $\delta_i$ and $\varepsilon_i$ which are associated with the parameter-tuple $L_i=(a_i,b_i,\delta_i,\varepsilon_i)$ which initiates the control signal (ST).

6. Circuit arrangement according to Claim 5, characterized in that a subtracter (S3) is provided which forms the difference between the quadrature phase errors $\delta_i$ and $\varepsilon_i$ associated with each parameter-tuple $L_i=(a_i,b_i,\delta_i,\varepsilon_i)$ produced by the parameter generator (PG), and in that the quadrature phase error difference $\delta_i - \varepsilon_i$, which is associated with the parameter-tuple $L_i$ which initiates the control signal (ST), is used as control information ($\hat{\delta\text{-}\varepsilon}$).

7. Circuit arrangement according to Claim 6, characterized in that an accumulator (AKK) is provided which adds up all those quadrature phase error differences $\delta_i - \varepsilon_i$ which the control signal (ST) switches through to the accumulator (AKK) from all the parameter-tuples $L_i$ produced by the parameter generator (PG), and in that the accumulator (AKK) is designed in such a manner that the accumulator contents are in each case deleted at the start of each parameter-tuple sequence $L_i$.

8. Circuit arrangement according to Claim 7, characterized in that the output signal of the accumulator (AKK) is fed to a circuit module (MNL) whose transfer function is selected such that its output signal implements a desired discriminator characteristic.

9. Circuit arrangement according to one of Claims 5 to 8, characterized in that the parameter generator (PG) is implemented by means of a read only memory (ROM) and a cyclically running address counter (ADR), the values of the parameter-tuples $L_i=(a_i,b_i,\delta_i,\varepsilon_i)$ being installed in the memory (ROM) at the addresses supplied by the address counter (ADR).

**Revendications**

1. Procédé pour déterminer une information de régulation pour la phase en quadrature dans un récepteur de signaux à modulation d'amplitude en quadrature (QAM) à l'aide d'un discriminateur qui, à partir des composantes du signal de réception (QAM), déduit une information de régulation pour la phase en quadrature des signaux de porteuse responsables, de la démodulation du signal de réception QAM dans le récepteur,

caractérisé en ce que
pour chaque paire de composantes du signal de réception QAM

$$y=(a_s, b_s)$$

avec les composantes

$$a_s=a \cos(\delta+\varepsilon)-b \sin(\delta-\varepsilon)$$

et

$$b_s=-a \sin(\delta-\varepsilon)+b \cos(\delta+\varepsilon),$$

formules dans lesquelles a et b représentent les amplitudes des composantes en quadrature du signal, à l'erreur de phase en quadrature des porteuses des signaux d'émetteur et $\varepsilon$ l'erreur de phase en quadrature des signaux de porteuse convertissant le signal QAM dans la bande de base, par quantification de ses composantes $a_S$ et $b_S$, on forme une paire de

valeurs

$$\hat{y} = (\hat{a}, \hat{b})$$

- pour chaque paire de composantes du signal de réception $\hat{y}=(\hat{a}, \hat{b})$, on génère un nombre fini de groupes de paramètres $L_i= (a_i, b_i, \delta_i, \varepsilon_i)$, $1=0,1,2,...$ possibles dans le système de transmission QAM,

- à partir de chaque groupe de paramètres, on forme une paire de valeurs

$$\hat{y}_i = (\hat{a}_i, \hat{b}_i)$$

avec les composantes

$$\hat{a}_i = a_i \cos (\delta_i + \varepsilon_i) - b_i \sin(\delta_i - \varepsilon_i)$$

$$\hat{b}_i = -a_i \sin(\delta_i - \varepsilon_i) + b_i \cos (\delta_i + \varepsilon_i)$$

- pour cette paire de valeurs $\hat{y}_i$ on définit une distance par rapport à la paire de valeurs $\hat{y}$, en formant les différences $\hat{a} - \hat{a}_i$ et $\hat{b} - \hat{b}_i$,

- par comparaison à une valeur de seuil on décide si cette distance est inférieure à un seuil prédéterminé (S)

- et la réunion de toutes les différences entre l'erreur de phase en quadrature $\delta_i$ et l'erreur de phase en quadrature $\varepsilon_i$ qui existe lorsque la distance entre les paires de valeurs correspondantes est inférieure au seuil (S), est utilisée comme information de régulation de l'erreur de phase en quadrature $\varepsilon$ à la réception.

2. Procédé selon la revendication 1, caractérisé en ce qu'on forme la différence des erreurs de phase en quadrature $\delta_i$ et $\varepsilon_i$ appartenant à chaque groupe de paramètres $L_i=(a_i, b_i, \delta_i, \varepsilon_i)$, et on utilise la différence d'erreur de phase en quadrature $\delta_i - \varepsilon_i$ appartenant au groupe de paramètres $L_i$ correspondant à une différence située en dessous du seuil prédéterminé (S) entre la paire de composantes de signal $(a_i, b_i)$ découlant du groupe de paramètres, et la paire de composantes du signal de réception a, b, appliquées respectivement, pour créer l'information de régulation.

3. Procédé selon la revendication 2, caractérisé en ce qu'on forme l'information de régulation à partir de la somme de toutes les différences d'erreurs de phase en quadrature $\delta_i-\varepsilon_i$ qui appartiennent au groupe de paramètres $L_i=(a_i, b_i, \delta_i, \varepsilon_i)$ correspondant à une différence inférieure au seuil prédéterminé (S).

4. Procédé selon la revendication 3, caractérisé en ce que le signal de somme des différences d'erreurs en quadrature $\delta_i-\varepsilon_i$ est appliqué à un composante MNL dont la caractéristique de transfert lui donne une fonction permettant de réaliser une caractéristique de discriminateur, souhaitée.

5. Circuit pour déterminer une information de régulation pour une phase en quadrature dans un récepteur de signaux à modulation d'amplitude en quadrature (QAM) à l'aide d'un discriminateur qui, à partir des composantes du signal de réception QAM, fournit une information de régulation pour la phase en quadrature des signaux de porteuse responsables de la démodulation du signal de réception QAM dans le récepteur, circuit caractérisé par :

- des quantificateurs (AD1, AD2) qui, pour chaque paire de composantes du signal de réception QAM

$$y = (a_s, b_s)$$

avec

$$a_s = a.\cos (\delta+\varepsilon) - b.\sin (\delta-\varepsilon)$$

et

$$b_s = -a.\sin (\delta-\varepsilon) + b.\cos(\delta+\varepsilon)$$

a et b représentant les amplitudes des composantes de signal en quadrature, à l'erreur de phase de quadrature de la porteuse du signal d'émission et $\varepsilon$ l'erreur de phase de quadrature des signaux de porteuse convertissant le signal QAM dans la bande de base, forment une paire de valeurs

$$\hat{y} = (\hat{a}, \hat{b})$$

- un générateur de paramètres (PG) pour chaque paire de composantes du signal de réception $\hat{y} = (\hat{a}, \hat{b})$ crée dans l'ordre un nombre fini de groupes de paramètres $L_i=(a_i, b_i, \delta_i, \varepsilon_i)$, $i=1,2,3,...$ possibles dans le système de transmission QAM,

- des moyens (A, S1, S2, S3, M1, M2, M3, M4, COS, SIN) qui, pour chaque groupe de paramètres Li, forment la paire de valeurs

$$\hat{y}_i = (\hat{a}_i, \hat{b}_i)$$

avec les composantes

$$\hat{a}_i = a_i \cos(\delta_i + \varepsilon_i) - b_i \sin(\delta_i - \varepsilon_i)$$

et

$$\hat{b}_i = -a_i \sin(\delta_i - \varepsilon_i) + b_i \cos (\delta_i + \varepsilon_i)$$

- un circuit de décision à seuil (ABE) qui détermine la différence de chaque paire de valeurs $\hat{y}_i$ d'une paire de valeurs $\hat{y}$ quantifiée, appliquée au discriminateur et en cas de différence inférieure à un seuil prédéterminé (S), émet un signal de commande (ST), et en ce que le signal de commande (ST) assure la tranmission d'une information de régulation

$$(\widehat{\delta - \epsilon}, Q(\widehat{\delta - \epsilon})$$ convenant pour la régulation de quadrature, information dans laquelle $Q(\widehat{\delta-\epsilon})$ est une valeur évaluée de la différence d'erreur de phase en quadrature $\widehat{\delta-\epsilon}$ pour la sortie du discriminateur, cette information de régulation étant déduite des erreurs de phase en quadrature $\delta_i$ et $\epsilon_i$ appartenant au groupe de paramètres $L_i=(a_i, b_i, \delta_i, \epsilon_i)$ qui déclenchent le signal de commande (ST).

6. Circuit selon la revendication 5, caractérisé par un soustracteur (S3) qui forme la différence des erreurs de phase en quadrature $\delta_i$ et $\epsilon_i$ appartenant à chaque groupe de paramètres $L_i=(a_i, b_i, \delta_i, \epsilon_i)$ créé par le générateur de paramètres (PG), et la différence d'erreur de phase en quadrature $\delta_i - \epsilon_i$ qui appartient au groupe de paramètres $L_i$ déclenchant le signal de commande $L_i$, est utilisée comme information de

régulation $(\widehat{\delta-\epsilon})$.

7. Circuit selon la revendication 6, caractérisé par un accumulateur (AKK) qui additionne toutes les différences d'erreur de phase en quadrature $\delta_i - \epsilon_i$ qui transmettent le signal de commande (ST) de tous les groupes de paramètres $L_i$ générés par le générateur de paramètre à l'accumulateur (AKK) conçu pour que son contenu soit effacé chaque fois au début d'une suite de groupes de paramètres $L_i$.

8. Circuit selon la revendication 7, caractérisé en ce que le signal de sortie de l'accumulateur (AKK) est appliqué à un élément (MNL) dont la caractéristique de transfert est choisie pour que son signal de sortie réalise une caractéristique de discrimination souhaitée.

9. Circuit selon l'une des revendications 5 à 8, caractérisé en ce que le générateur de paramètres (PG) est réalisé par une mémoire morte (ROM) et un compteur d'adresse (ADR) fonctionnant de manière cyclique, les valeurs des groupes de paramètres $L_i=(a_i, b_i, \delta_i, \epsilon_i)$ étant enregistrées dans une mémoire (ROM) aux adresses fournies par le compteur d'adresses (ADR).

Fig. 1

Fig. 2

Fig. 3

Fig. 4

Fig. 5

EP 0 493 748 B1